# EUROPEAN PATENT APPLICATION

(11) **EP 4 848 705 A1**
(43) Date of publication of application: **02.12.2026**
(21) Application number: 26178658.6
(22) Date of filing: 13.05.2026
(51) Int. Cl.: H04N 5/222, G06T 7/246, H04N 5/262, H04N 5/272, H04N 23/90

(54) **INFORMATION PROCESSING APPARATUS, IMAGE CAPTURING SYSTEM, METHOD, AND COMPUTER PROGRAM**

(30) Priority: 27.05.2025 JP 2025088208
(71) Applicant: Canon Kabushiki Kaisha, Tokyo 146-8501 (JP)
(72) Inventor: KOBAYASHI, Takashi, Tokyo, 146-8501 (JP); SAKABA, Koki, Tokyo, 146-8501 (JP)
(74) Representative: Canon Europe Limited

(57) **Abstract**

An information processing apparatus (300) comprising: one or more memories storing instructions; and one or more processors executing the instructions to: perform output, in a time-sliced manner, of first background CG captured by a first image capturing apparatus (100), second background CG captured by a second image capturing apparatus (200), and an indicator image captured by the first image capturing apparatus (100) and the second image capturing apparatus (200) to a display device (400), wherein the indicator image includes an indicator for specifying a three-dimensional position and direction of each of the first image capturing apparatus (100) and the second image capturing apparatus (200), and is displayed on the display device (400) in a period during which image capture is simultaneously performed by the first image capturing apparatus (100) and the second image capturing apparatus (200).

## Description

### TECHNICAL FIELD

The present disclosure relates to an information processing apparatus, an image capturing system, a method, and a computer program.

### BACKGROUND

Chroma key shooting for compositing video shot in a studio to appear as though it was shot at a different location, by shooting video of an object in front of a single color background such as green or blue and replacing the single color background portions of the captured video with video shot at a different location has been implemented heretofore.

In recent years, shooting of visual effects (VFX) video that makes use of actual video that has been shot and computer graphics (hereinafter, "CG") has become widespread in the video production industry. VFX shooting in which a large display device (display) is disposed in a studio and an object is captured in front of the display device while displaying video of another location on the display device, rather than compositing video after shooting, is rapidly becoming widespread in recent years. In this case, the object and background portion are captured simultaneously at the time of shooting video, and compositing after shooting is not required. Thus, this technique is called "in-camera VFX shooting" in the sense that VFX shooting is completed at the time of shooting. In-camera VFX shooting does not require post-shoot compositing, and thus content can be produced quickly on a low budget.

In natural VFX shooting, video displayed in the background preferably changes in conjunction with movement of the image capturing apparatus at the time of VFX shooting. In other words, the background video is not video captured in advance but CG that is generated as needed according to movement of the image capturing apparatus at the time of shooting. Thus, the position and orientation of the image capturing apparatus in three-dimensional space and changes in the lens state are detected/tracked in real time, and CG that matches such information is regenerated and displayed on the display device. With regard to the lens state, if the image capturing apparatus and the lens are integrated, lens information (focus, zoom, aperture, etc.) necessary for CG generation can be grasped within the image capturing apparatus. In the case of an interchangeable-lens image capturing apparatus and a lens, the lens state can be grasped through a communication protocol between the image capturing apparatus and the lens. On the other hand, precisely grasping the three-dimensional position and orientation of the image capturing apparatus with a general image capturing apparatus alone is difficult.

In view thereof, a technique that involves disposing "markers" that serve as positioning indicators and tracking the three-dimensional position and orientation of an image capturing apparatus from images shot of the markers has been disclosed (U.S. Pat. No. 10,275,899). Also, a technique that involves switching between displaying background CG and markers that serve as positioning indicators in a time-sliced manner (time-shared manner), and performing image capture while time-sharing VFX shooting and the positioning markers has been disclosed (U.S. Pat. Pub. No. 2024/0305738).

Incidentally, in a video production workflow, generally the number of retakes is reduced by shooting simultaneously from different angles with a plurality of image capturing apparatuses, thereby reducing the burden on the performers and allowing for efficient video production. With in-camera VFX, there is only one display device located in the background of the object, when shooting with a plurality of image capturing apparatuses. Thus, background video that matches one of the image capturing apparatuses will, when displayed, not match the other image capturing apparatuses.

In view thereof, a technique that involves switching between displaying CG that matches each of the image capturing apparatuses in a time-sliced manner (time-shared manner), in the case of shooting video of a display device using a plurality of image capturing apparatuses, has been disclosed (U.S. Pat. No. 11,310,436). The shooting timing of the image capturing apparatuses is controlled to be synchronized with the switching timing of the background video on the display device, and each of the image capturing apparatuses only performs image capture in the display period of matching background video, thereby enabling all of the image capturing apparatuses to shoot natural VFX.

A technique that involves switching markers for positioning the image capturing apparatus in a time-sliced manner (time-shared manner) was introduced above. With in-camera VFX shooting using a plurality of image capturing apparatuses, the markers that correspond to the image capturing apparatuses need to be switched in a time-sliced manner.

### SUMMARY

At that time, switching of background video and switching of markers occurs, and thus the respective video display times are shortened. The time available for exposure in the image capturing apparatuses is shortened as a result. When exposure time is shortened, the movement of the object looks unnatural in video. Also, with shooting video of a display device, the video may be partially defective or accurate coloring may not be achieved. In this way, with VFX shooting using a plurality of image capturing apparatuses, the frequency of switching in a time-sliced manner may be too high, shortening the exposure time available for shooting images, and not allowing a natural image quality to be achieved.

In view thereof, the present disclosure provides a technology for capturing natural VFX video with in-camera VFX shooting using a plurality of image capturing apparatuses.

The present disclosure in its first aspect provides an information processing apparatus as specified in claim 1. Optional features are specified in claims 2 to 13.

The present disclosure in its second aspect provides an image capturing system as specified in claim13. Optional features may be specified in or derived from claims 2 to 13.

The present disclosure in its third aspect provides a method as specified in claim 14. Optional features may be specified in or derived from claims 2 to 13.

The present disclosure in its fourth aspect provides a computer program as specified in claim 16. Optional features may be specified in or derived from claims 2 to 13.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram showing an example of an image capturing system 1 according to a first embodiment.
FIG. 2 is a diagram illustrating an internal configuration of an image capturing apparatus 100, 200 according to the first embodiment.
FIG. 3 is a diagram illustrating data flow between the devices in the image capturing system 1 according to the first embodiment.
FIG. 4 is a diagram showing an example of video shot of indicators displayed on a display device 400 according to the first embodiment.
FIG. 5 is a diagram showing an example operation of in-camera VFX shooting by a plurality of image capturing apparatuses according to the first embodiment.
FIG. 6 is a diagram showing an overall operation timing of the image capturing system 1 according to the first embodiment.
FIG. 7 is a diagram showing an example of indicators displayed on the display device 400 according to the first embodiment.
FIG. 8 is a diagram showing the disposition of indicators when the shooting angle of view varies greatly with movement of the image capturing apparatus according to the first embodiment.
FIG. 9 is a diagram showing another example of the disposition of indicators displayed on the display device 400 according to the first embodiment.
FIG. 10 is a diagram showing another example of the disposition of indicators displayed on the display device 400 according to the first embodiment.
FIG. 11 is a diagram showing an example of an image capturing system 1 according to a second embodiment.
FIG. 12 is a diagram illustrating data flow between devices in the image capturing system 1 according to the second embodiment.
FIG. 13 is a diagram showing an overall operation timing of the image capturing system 1 according to the second embodiment.
FIG. 14 is a diagram showing another overall operation timing of the image capturing system 1 according to the second embodiment.
FIG. 15 is a diagram showing an overall operation timing of an image capturing system 1 according to a third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and one or multiple such features may be combined as appropriate or where advantageous. Furthermore, in the attached drawings, the same reference numerals are given to the same or similar configurations, and redundant description thereof is omitted.

### First Embodiment

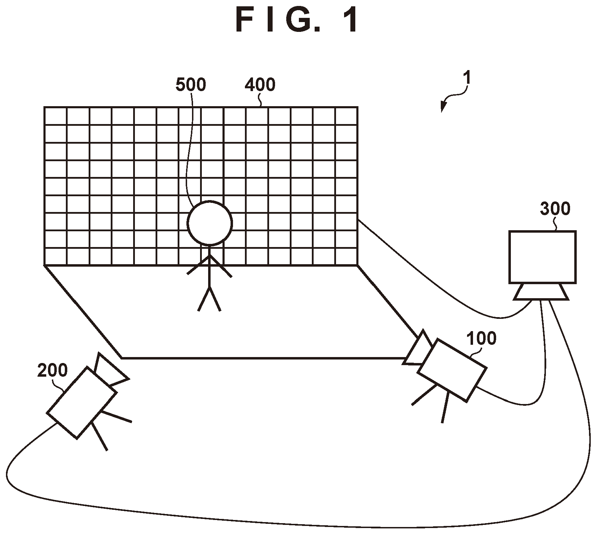

Hereinafter, a first embodiment will be described based on the accompanying drawings. FIG. 1 is a diagram showing an example of an image capturing system 1 according to the first embodiment.

The image capturing system 1 is provided with at least two image capturing apparatuses (image capturing apparatus 100, image capturing apparatus 200), a display device 400, and an information processing apparatus 300 that communicates with the at least two image capturing apparatuses and the display device 400. The devices in the image capturing system 1 are connected to each other by cable, but may be connected wirelessly, or by a combination of cable and wireless.

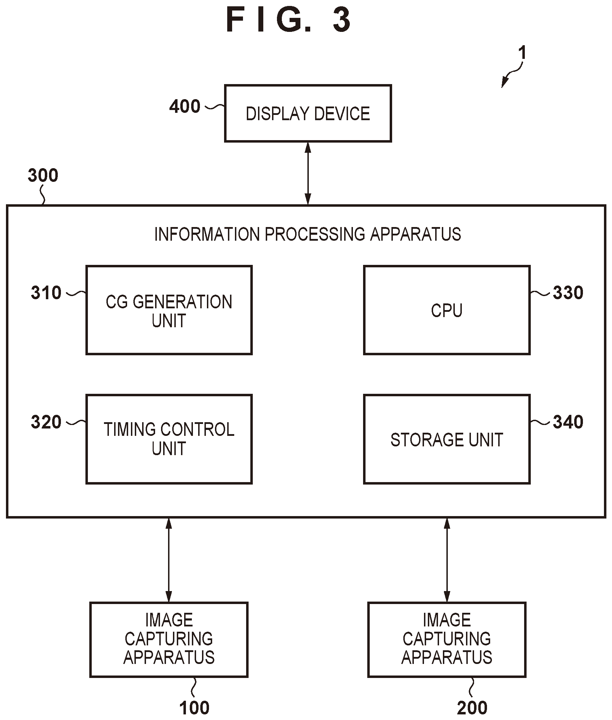

The image capturing apparatus 100 and the image capturing apparatus 200 perform VFX shooting. Herein, an example will be described in which the image capturing system 1 is provided with two image capturing apparatuses, but the image capturing system 1 may be provided with two or more image capturing apparatuses or one or more image capturing devices. Furthermore, the image capturing system 1 of the present embodiment includes the information processing apparatus 300 connected to both the image capturing apparatus 100 and the image capturing apparatus 200. The information processing apparatus 300 is a control device for use in in-camera VFX shooting, and is, for example, a terminal such as a laptop, a desktop, a tablet, or the like. The information processing apparatus 300 is connected to the display device 400. The information processing apparatus 300 will be described later using FIG. 3.

The display device 400 is larger in size than an object 500 (person), as shown in FIG. 1. The display device 400 is, for example, a large light-emitting diode (LED) display wall, but is not limited thereto. Examples of the display device 400 include an organic light-emitting diode (OLED), a polymer light-emitting diode (PLED), an active matrix light-emitting diode (AMOLED), a liquid crystal display (LCD), and a light-emitting electrochemical cell (LEC). The display device 400 is able to display background CG (background CG 1, background CG 2) corresponding to the at least two image capturing apparatuses (image capturing apparatus 100, image capturing apparatus 200) and an indicator image. The object 500 (e.g., image capture target such as a performer, actor, etc.) is in front of the display device 400. Video displayed on the display device 400 serves as the background. Images of the object 500 and the display device 400 are captured by the image capturing apparatus 100 and the image capturing apparatus 200. Such an image capturing system 1 is mainly installed in indoor shooting studios but may also be installed outdoors.

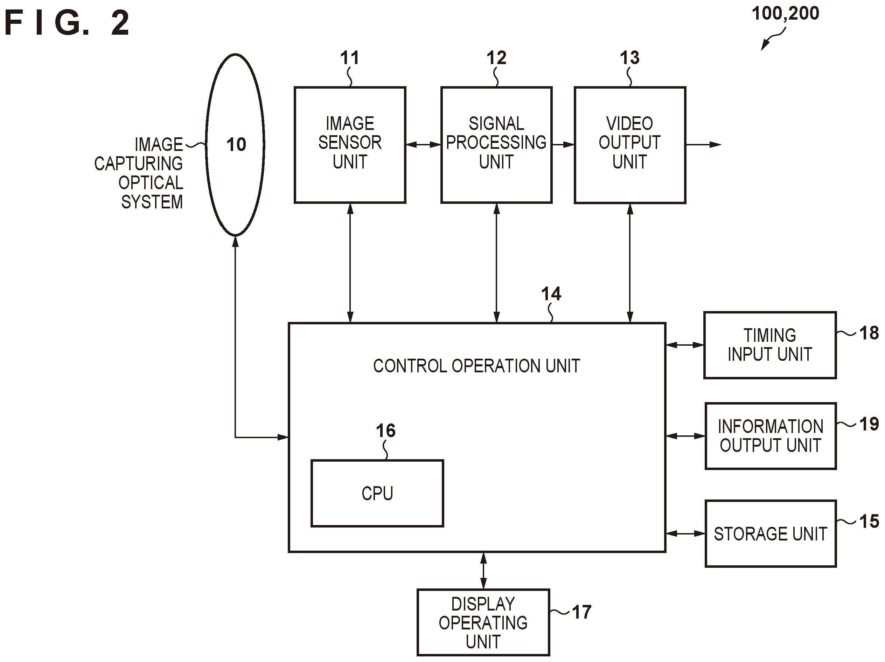

FIG. 2 is a diagram illustrating an internal configuration of the image capturing apparatus 100 according to the first embodiment.

The image capturing apparatus 100 has an image capturing optical system 10. In the current embodiment, the image capturing optical system 10 has therein a focus mechanism, a zoom mechanism, a diaphragm mechanism, a neutral density (ND) filter insertion and removal mechanism for input light control, an image stabilize (IS) lens mechanism for vibration isolation control, and the like; however, in other embodiments, the image capturing optical system may have some or all of the features. Herein, the image capturing optical system 10 is illustrated as an internal element of the image capturing apparatus 100. In another embodiment, the image capturing optical system 10 may be in the form of an interchangeable lens product that is attachable and detachable with respect to the image capturing apparatus 100. In that case, a communication interface (IF) can be provided between a control operation unit 14 and the image capturing optical system 10, and control signals and information relating to the control state can be communicated via the communication IF.

The image capturing apparatus 100 has an image sensor unit 11. The image sensor unit 11 photoelectrically converts an object image formed on the image sensor unit 11 through the image capturing optical system 10 and generates a digital image. The generated digital image is transmitted to a signal processing unit 12. The signal processing unit 12 performs various digital image processing on the digital image, and outputs the generated image signal externally through a video output unit 13.

The video output unit 13 may have a plurality of output IFs, and the output IFs may be switched every shot image. Also, the image capturing optical system 10, the image sensor unit 11, the signal processing unit 12, and the video output unit 13 are each connected to the control operation unit 14, and various processing is performed based on instructions from the control operation unit 14.

A central processing unit (CPU) 16 is provided inside the control operation unit 14. The CPU 16 is able to perform various computations at high speed. Also, a storage unit 15 is connected to the control operation unit 14. The storage unit 15 is a memory for storing various data and programs, and includes, for example, a non-volatile memory such as a read only memory (ROM) and an HDD, and a volatile memory such as a random access memory (RAM). Image signals generated by the signal processing unit 12 can be recorded in the storage unit 15. Furthermore, data to be used in the control operation unit 14 can also be stored in the storage unit 15 in advance. A display operating unit 17 is connected to the control operation unit 14. The display operating unit 17 is able to change various controls by being operated by a user. Also, the display operating unit 17 is able to display the status of image signals and various settings of the image capturing apparatus 100, and present such information to the user.

A timing input unit 18 and an information output unit 19 are connected to the control operation unit 14. The timing input unit 18 is able to receive the image capture timing from outside (external to the image capturing apparatus), and control the image capture timing of the image sensor unit 11 through the control operation unit 14. Furthermore, the information output unit 19 is connected to the control operation unit 14. The information output unit 19 is able to output various settings of the image capturing apparatus 100 and lens information such as focus position, zoom position, and aperture position of the image capturing optical system 10.

While the description has focused on the internal configuration of the image capturing apparatus 100 and the roles of the various units thereof, there is no difference between the functions and roles required of the image capturing apparatus 100 and the image capturing apparatus 200 in the image capturing system 1. Accordingly, description of the internal configuration of the image capturing apparatus 100 and the roles of the various units thereof can be applied to the image capturing apparatus 200.

FIG. 3 is a diagram illustrating data flow between the devices in the image capturing system 1 according to the first embodiment.

The roles of the image capturing apparatus 100, the image capturing apparatus 200, the information processing apparatus 300, and the display device 400 in the image capturing system 1 and information exchanged between the devices will be described using FIG. 3. Various settings and lens information of the image capturing apparatus 100 are output from the image capturing apparatus 100 and input to the information processing apparatus 300. The various settings and lens information of the image capturing apparatus 100 are input to a CG generation unit 310 within the information processing apparatus 300. An angle of view that corresponds to the camera settings and lens information is specified in virtual space. Background CG 1 for representing the specified angle of view on the display device 400 as viewed from the image capturing apparatus 100 is generated by the CG generation unit 310. Furthermore, the image capturing apparatus 100 outputs video captured in order to specify the three-dimensional position and orientation of the image capturing apparatus 100.

A central processing unit (CPU) 330 is provided inside the information processing apparatus 300. The CPU 330 is able to perform various computations at high speed. Also, a storage unit 340 is provided in the information processing apparatus 300. The storage unit 340 is a memory for storing various data and programs, and includes, for example, a non-volatile memory such as a read only memory (ROM) and an HDD, and a volatile memory such as a random access memory (RAM). The functions of the CG generation unit 310 and a timing control unit 320 are realized by the CPU 330 executing programs stored in the storage unit 340.

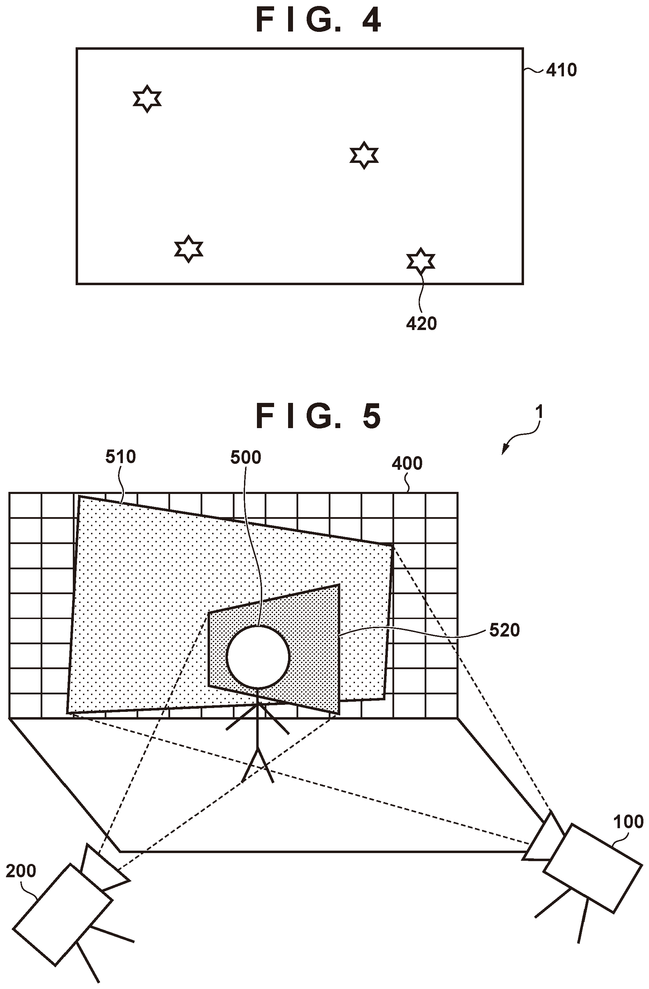

FIG. 4 is a diagram showing an example of a video, or image, shot of indicators displayed on the display device 400 according to the first embodiment.

As shown in FIG. 4, a plurality of indicators 420 that are trackable as feature points are displayed on the display device 400 so as to be captured within the angle of view of the image capturing apparatus 100 (image capturing apparatus 200). Video shot of this display device 400 by the image capturing apparatus 100 (image capturing apparatus 200) is video 410 (also called captured video). Herein, the indicators 420 are displayed in the shape of stars. However, the indicators 420 need only have a shape/color/brightness that is easy to extract as a feature point and are not limited to a star shape. Also, the video 410 is transmitted to the CG generation unit 310 of the information processing apparatus 300. Note that the outward appearance of an "indicator image" displayed on the display device 400 is substantially the same as the video 410. The indicator image may comprise means, for example one or more indicators, configured to be extracted as one or more feature points.

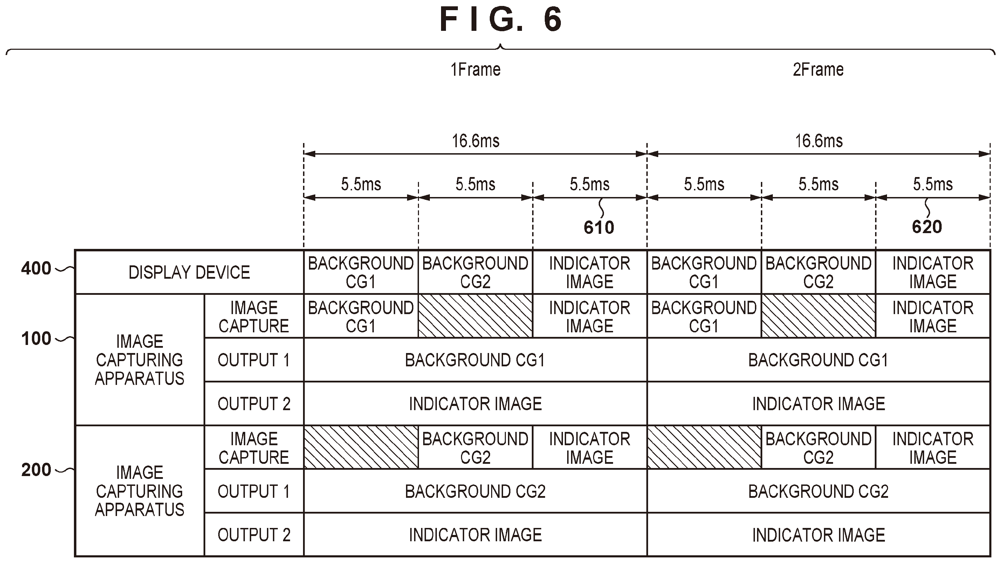

Hereinafter, additional description of the configuration of the indicator image will be given using the video 410 and the indicators 420. The indicator image (video 410) can include a plurality of indicators (indicators 420). The indicator image (video 410) includes indicators (indicators 420) for specifying the three-dimensional position and direction of each of the image capturing apparatus 100 (first image capturing apparatus) and the image capturing apparatus 200 (second image capturing apparatus). The indicator image (video 410) is displayed on the display device 400 in periods during which image capture is simultaneously performed by the image capturing apparatus 100 (first image capturing apparatus) and the image capturing apparatus 200 (second image capturing apparatus). Periods in which image capture is simultaneously performed refer to a period 610 indicating the last 5.5 ms of 1Frame and a period 620 indicating the last 5.5 ms of 2Frame in FIG. 6.

The CG generation unit 310 matches the positions of the indicators 420 displayed on the display device 400 with the positions of the indicators 420 in video (video 410) shot by the image capturing apparatus 100. The CG generation unit 310 is, furthermore, able to accurately track the three-dimensional position and orientation of the image capturing apparatus 100, by analyzing the way in which the indicators 420 move in the video 410. "Background CG 1" is generated by the CG generation unit 310 based on the three-dimensional position and orientation of the image capturing apparatus 100 tracked in this way.

Processing for generating "background CG 2" of the image capturing apparatus 200 is similar to the above. Various settings and lens information of the image capturing apparatus 200 are output from the image capturing apparatus 200 and input to the information processing apparatus 300. The various settings and lens information of the image capturing apparatus 200 are input to the CG generation unit 310 of the information processing apparatus 300. An angle of view that corresponds to the camera settings and lens information is specified in virtual space. "Background CG 2" for representing the specified angle of view on the display device 400 as viewed from the image capturing apparatus 200 is generated by the CG generation unit 310. Background CG 1 and the background CG 2 generated in this way are output from the information processing apparatus 300 to the display device 400. Also, images (video 410) including the indicators 420 disposed on the display device 400 mentioned above are generated by the CG generation unit 310 of the information processing apparatus 300 and output to the display device 400.

The display device 400 displays the background CG 1, the background CG 2, and an image including the indicators 420 (indicator image similar to video 410) output from the information processing apparatus 300 at respective timings transmitted from the information processing apparatus 300. The transmission timing of each image from the information processing apparatus 300 to the display device 400 is managed by the timing control unit 320 of the information processing apparatus 300. Timing control will be described in detail at a later stage using FIG. 6. As described above, the timing control unit 320 of the information processing apparatus 300 is output means for outputting the images (first background CG, second background CG, third background CG by free selection, and indicator image) to the display device 400 in a time-sliced manner. Also, the timing control unit 320 is control means for controlling output of the images (first background CG, second background CG, third background CG by free selection, and indicator image) to the display device 400 in a time-sliced manner, in an update cycle of a single image displayed on the display device 400.

Also, the information processing apparatus 300 transmits information relating to the control timing of the image capturing apparatuses to the image capturing apparatus 100 and the image capturing apparatus 200. Information relating to the control timing of the image capturing apparatuses includes a vertical synchronization signal (Vd signal) and timings relating to the start and end of exposure. The result of controlling the image capture timing of the image capturing apparatus 100 and the image capturing apparatus 200 (overall operation timing of the image capturing system 1) using information relating to the control timing of the image capturing apparatuses will be described at a later stage using FIG. 6.

FIG. 5 is a diagram showing an example operation of in-camera VFX shooting by a plurality of image capturing apparatuses according to the first embodiment.

In the image capturing system 1, the image capturing apparatus 100 and the image capturing apparatus 200 capture images of the object 500 located in front of the display device 400. At this time, the display device 400 within the shooting angle of view of the image capturing apparatus 100 displays the background CG 1 (illustrated by image 510) which meets the shooting conditions of the image capturing apparatus 100. The image capturing apparatus 100 is thereby able to simultaneously capture images of the object 500 and the natural background CG 1 (illustrated by image 510) and capture natural VFX video.

Similarly, the display device 400 within the shooting angle of view of the image capturing apparatus 200 displays the background CG 2 (illustrated by image 520) which meets the shooting conditions of the image capturing apparatus 200. The image capturing apparatus 200 is thereby able to simultaneously capture images of the object 500 and the natural background CG 2 (illustrated in image 520) and capture natural VFX video.

Herein, in the case of the image capturing apparatus 100 and the image capturing apparatus 200 shooting images simultaneously, the two background CG that meet the respective shooting conditions of the image capturing apparatuses need to be displayed on the display device 400. However, the display device 400 is a single device and is not able to simultaneously display two background CG in the same location. In view thereof, the shooting timing of the image capturing apparatus 100 and the shooting timing of the image capturing apparatus 200 are shifted slightly with respect to each other, and the background CG 1 and the background CG 2 are alternately displayed on the display device 400 in synchronization with the shooting timing of the image capturing apparatus 100 or the image capturing apparatus 200. In-camera VFX shooting can thereby be executed simultaneously by the image capturing apparatus 100 and the image capturing apparatus 200.

Herein, in order to generate the background CG 1 and the background CG 2 that respectively meet the shooting conditions of the image capturing apparatus 100 and the image capturing apparatus 200, the three-dimensional position and orientation of the image capturing apparatus 100 and the image capturing apparatus 200 must be precisely tracked. A technique that involves displaying an indicator image (indicators 420) on the display device 400 and tracking the movement of the indicators 420 in video shot by the image capturing apparatus 100 and the image capturing apparatus 200 was discussed above. In the example operation of the image capturing system 1 having two image capturing apparatuses, adopting this technique requires switching between displaying the background CG 1, the background CG 2, the indicator image for the image capturing apparatus 100, and the indicator image for the image capturing apparatus 200. As a result, an issue arises in that the display periods of the background CG 1 and the background CG 2 are limited, and the period available for shooting in the image capturing apparatus 100 and the image capturing apparatus 200 becomes extremely short. In view thereof, a technique that resolves this problem will be described in the next section using FIG. 6.

FIG. 6 is a diagram showing an overall operation timing of the image capturing system 1 according to the first embodiment.

The operation timing of the image capturing apparatus 100, the image capturing apparatus 200, and the display device 400 is shown in FIG. 6. Herein, a case in which VFX video at 60 frames per second (fps) is captured by the image capturing apparatus 100 and the image capturing apparatus 200 will be illustrated. 60 fps is an example of the frame rate, and a frame rate other than 60 fps may be used. Note that frame rate (fps) is a unit indicating the number of images (still images) constituting one second of video.

The display device 400 switches between displaying the background CG 1, the background CG 2, and the indicator image (video 410) sequentially in a time-sliced manner during one 16.6 ms cycle of 1Frame at 60 fps. Herein, "one 16.6 ms cycle of 1Frame at 60 fps" is also called the update period of one image. In other embodiments the time of the cycle may be set based on the fps to ensure that there is time to render a frame or image and minimize missed frames to maintain smooth motion. As a result, the switching time period of individual video on the display device 400 is a period of 5.5 ms equivalent to 180 fps. Herein, 16.6 ms is divided equally to provide 5.5 ms each, but the display period need not be divided equally. For example, the display period of the background CG 1 may be set to 6.6 ms, the display period of the background CG 2 may be set to 6.6 ms, and the display period of the indicator image may be set to 3.3 ms. In this case, longer display periods are allocated to the background CG 1 and the background CG 2 than to the indicator image. The image capturing apparatus 100 captures images of the object 500, based on an angle of view that includes the background CG 1 and the object 500. In this way, the image capturing apparatus 100 captures images of the object 500 in the display period of the background CG 1 and does not shoot images of the object 500 in the display period of the background CG 2 that is displayed after the background CG 1.

On the other hand, focusing on the operations of the image capturing apparatus 200, the image capturing apparatus 200 does not perform image capture of the object 500 in the display period of the background CG 1 and performs image capture of the object 500 in the display period of the background CG 2. The image capturing apparatus 100 and the image capturing apparatus 200 capture images of the object 500 in the display period of the indicator image that is displayed after the background CG 2. Herein, the "indicator image" is an image for specifying the three-dimensional position and orientation of the image capturing apparatus 100 and the image capturing apparatus 200, through image capture performed by the image capturing apparatus 100 and the image capturing apparatus 200. Also, the three-dimensional position and direction of the image capturing apparatus 100 and the image capturing apparatus 200 can be tracked by following the change in indicator positions within the images captured of the indicator image.

Also, the image capturing apparatus 100 and the image capturing apparatus 200 can output a shot image separately every time-series. Images shot in the display periods of the background CG 1 and the background CG 2 may be recorded to recording media mounted inside the image capturing apparatus 100 and the image capturing apparatus 200, or may be output as serial signals (video signals) from an output 1 provided to the image capturing apparatus 100 and the image capturing apparatus 200.

On the other hand, images captured in the display period of the indicator image may be output from an output 2, which is a different output from images captured in the display periods of the background CG 1 and the background CG 2, or may be recorded on recording media as separate files from images captured in the display periods of the background CG 1 and the background CG 2. In this way, images captured in the display period of the indicator image are output separately from images captured in the display periods of the background CG 1 and the background CG 2. The output 1 in FIG. 6 includes only images captured of the background CG 1 and CG 2 and the object. The output 2 in FIG. 6 includes only images captured of the indicators and the object.

Indicators are inclusively captured in the images from the output 2 of the image capturing apparatus 100, and are thus used in specifying the three-dimensional position and orientation of the image capturing apparatus 100, and indicators are inclusively captured in the images from the output 2 of the image capturing apparatus 200, and are thus used in specifying the three-dimensional position and orientation of the image capturing apparatus 200. The fact that there is conventional technology applicable to the technique relating to specifying the three-dimensional position and orientation of the image capturing apparatus 200 has been discussed above, and thus detailed description thereof is omitted here. The information processing apparatus 300 connected to the image capturing apparatus 100 and the image capturing apparatus 200 analyzes images.

Also, as another embodiment, a configuration may be adopted in which images to be output from the output 2 that include indicators are analyzed inside the image capturing apparatus 100 and the image capturing apparatus 200, and only the specified three-dimensional position and orientation are transmitted to the information processing apparatus 300. Focusing on the update cycle of images, the display device 400 switches images in a cycle equivalent to 180 fps. On the other hand, the update cycle of images that are output to the output 1 and the output 2 of the image capturing apparatus 100 and the image capturing apparatus 200 is equivalent to 60 fps. When different indicator images are used for the image capturing apparatus 100 and the image capturing apparatus 200, the images on the display device 400 will be updated in a cycle that is four times the image capture cycle of the image capturing apparatus 100 and the image capturing apparatus 200. As discussed up to this point, by using a common indicator image for the image capturing apparatus 100 and the image capturing apparatus 200, updating can be kept to a cycle that is three times the image capture cycle of the image capturing apparatuses. As a result, longer display periods of the background CG 1 for the image capturing apparatus 100 and the background CG 2 for the image capturing apparatus 200 can be secured, and the exposure times of the image capturing apparatus 100 and the image capturing apparatus 200 can be extended compared with conventional technology.

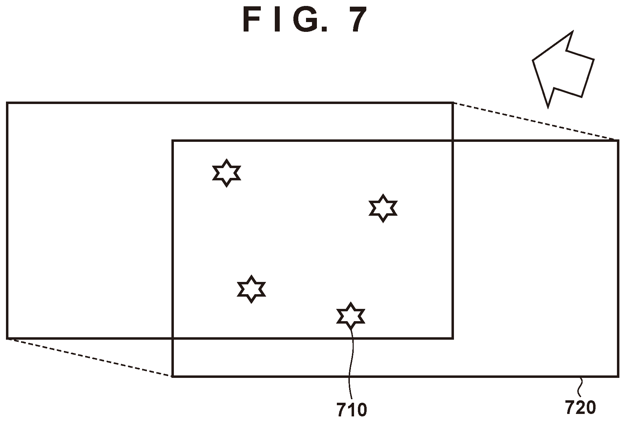

Next, display of the indicator image will be described using FIGS. 7 to 9. FIG. 7 is a diagram showing an example of indicators displayed on the display device 400 according to the first embodiment.

Indicators 710 (markers) with which movement of the image capturing apparatuses is trackable are displayed on the display device 400. An image 720 shot of the display device 400 by the image capturing apparatus 100 is shown in FIG. 7. Four indicators 710 are displayed within the angle of view of the image capturing apparatus 100. FIG. 7 shows an example in which the four indicators 710 are retained within the angle of view, when the image capturing apparatus 100 is rotated/moved such that the shooting region of the image capturing apparatus 100 is shifted to the upper left. The movement of the image capturing apparatus 100 can be precisely analyzed, by analyzing the distance that these indicators 710 have moved in the images shot by the image capturing apparatus 100. In relation to the number of indicators 710, in general, a greater number of indicators 710 enables more complex movement of the image capturing apparatus 100 to be grasped. Only the movement of the image capturing apparatus 100 can be tracked if a single indicator 710 is used, the movement and rotation of the image capturing apparatus 100 can be tracked if two indicators 710 are used, and the movement, rotation, and distortion of the image capturing apparatus 100 can be tracked if four indicators 710 are used. In VFX shooting, movement of the image capturing apparatus 100 needs to be accurately tracked. Thus, the positions of the indicators 710 are preferably determined in advance, such that the four indicators 710 are located in the movement range of the shooting angle of view of the image capturing apparatus 100. The above description using the example of the image capturing apparatus 100 is also applicable to the image capturing apparatus 200.

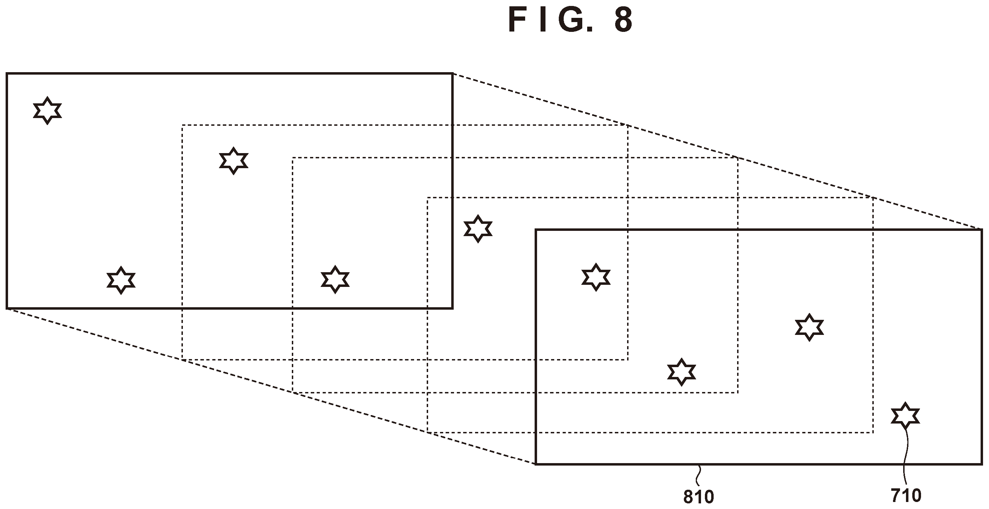

FIG. 8 is a diagram showing the disposition of indicators when the shooting angle of view varies greatly with movement of the image capturing apparatuses according to the first embodiment.

FIG. 8 shows image capture starting from an angle of view capturing the lower right region of the display device 400 and the image capturing apparatus 100 moving so as to capture the upper left region at the end of shooting. The following description of the image capturing apparatus 100 is also applicable in the case of image capture by the image capturing apparatus 200. Differences from FIG. 7 include greater movement of the shooting angle of view of the image capturing apparatus 100 and a common shooting region not being included at the beginning and end of shooting. In this case, the image capturing apparatus 100 cannot be tracked continuously with the same indicators 710 throughout the entire shooting, and thus the indicators 710 need to be changed during shooting. At this time, in order to accurately track the image capturing apparatus 100, four indicators 710 need to be kept within the angle of view. Thus, four or more indicators 710 are preferably disposed within all angles of view, taking into consideration the movement of the image capturing apparatus 100. In other words, the indicator image (e.g., region 810 including indicators 710 in FIG. 8) can include at least four indicators (indicators 710).

If a disposition of the indicators 710 such as shown in FIG. 8 is used, a minimum of four indicators 710 can be kept within any shooting angle of view following movement of the image capturing apparatus 100. In general, the disposition density of the indicators 710 is set such that a minimum number of indicators 710 are included in any angle of view, according to the focal length of the image capturing apparatus 100, so as to not restrict movement of the image capturing apparatus 100. If the indicators 710 are evenly disposed throughout the display device 400, the three-dimensional position and orientation of the image capturing apparatus 100 can be accurately tracked no matter which direction the image capturing apparatus 100 moves in.

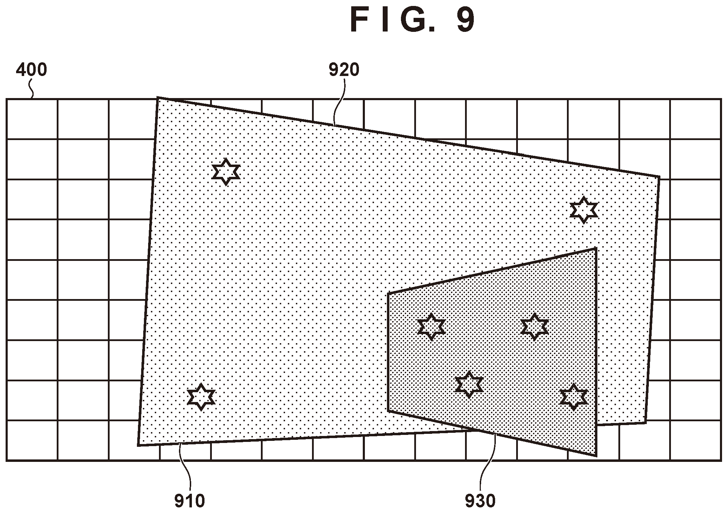

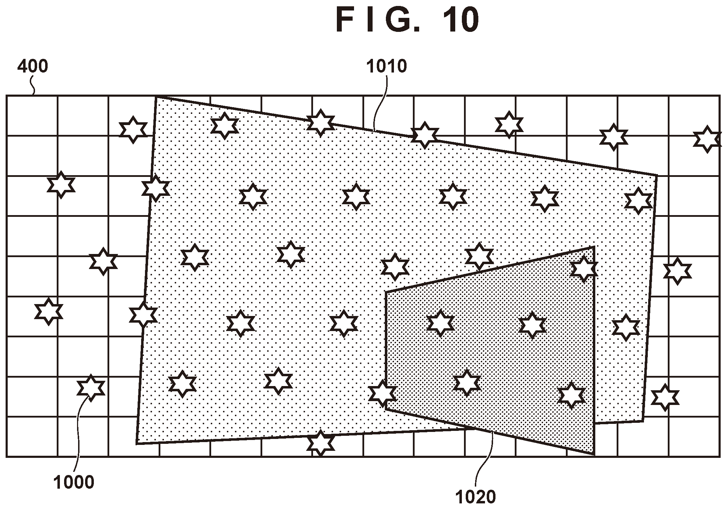

Next, disposition of indicators when performing image capture with a plurality of image capturing apparatuses will be described using FIGS. 9 and 10.

When performing image capture with a single image capturing apparatus, the image capturing apparatus 100 (image capturing apparatus 200) can be accurately tracked by disposing at least a certain number of indicators 420 within the angle of view, as shown in FIG. 4. In the case of considering the movement of the image capturing apparatus 100 (image capturing apparatus 200), it was described that tracking can be accurately performed if the indicators 710 are disposed, as shown in FIGS. 7 and 8. When considering the case of performing image capture with the image capturing apparatus 100 and the image capturing apparatus 200, at least a certain number of indicators need to be disposed within the shooting angle of view of both apparatuses.

FIG. 9 is a diagram showing another example of the disposition of indicators displayed on the display device 400 according to the first embodiment.

FIG. 9 shows a state in which, in the case where a shooting angle of view 920 of the image capturing apparatus 100 is wider than a shooting angle of view 930 of the image capturing apparatus 200, the shooting angle of view 920 of the image capturing apparatus 100 occupies a larger area in the display device 400. On the other hand, the focal length of the image capturing apparatus 200 is longer and telephoto, and it is evident that the shooting angle of view 930 of the image capturing apparatus 200 occupies a smaller area in the display device 400. Thus, as shown in FIG. 9, the indicators 910 are displayed on the display device 400, such that the shooting angle of view 920 and the shooting angle of view 930 each include a certain number of indicators 910. As a result, in the region of the display device 400 that corresponds to the shooting angle of view 920 of the image capturing apparatus 100 (region of the shooting angle of view 920), the indicators 910 are disposed in a low-density state (spread-out state). On the other hand, in the region of the display device 400 that corresponds to the shooting angle of view 930 of the image capturing apparatus 200 (region of the shooting angle of view 930), the indicators 910 are disposed in a high-density state (closely-clustered state).

As described above, in the display device 400, the indicators 910 are disposed in the region corresponding to the shooting angle of view 920 of the image capturing apparatus 100 at an indicator disposition density (e.g., low density) that is based on the size of the shooting angle of view 920 of the image capturing apparatus 100 (first image capturing apparatus). On the other hand, in the display device 400, the indicators 910 are disposed in the region corresponding to the shooting angle of view 930 of the image capturing apparatus 200 at an indicator disposition density (e.g., high density) that is based on the size of the shooting angle of view 930 of the image capturing apparatus 200 (second image capturing apparatus). Note that the disposition density of the indicators 910 in the region corresponding to the shooting angle of view 920 may be high, and the disposition density of the indicators 910 in the region corresponding to the shooting angle of view 930 may be low.

FIG. 10 is a diagram showing another example of the disposition of indicators displayed on the display device 400 according to the first embodiment.

FIG. 10 is a diagram showing an example in which indicators 1000 are disposed throughout the display device 400, based on the disposition density of the indicators 1000 in a shooting angle of view 1020 of the image capturing apparatus 200, which is narrower than a shooting angle of view 1010 of the image capturing apparatus 100. In this way, if the disposition density of the indicators 1000 in the display device 400 is determined according to the image capturing apparatus 200 having the narrower shooting angle of view 1020, the minimum number of indicators 1000 can be captured with the angles of view of the plurality of image capturing apparatuses. The three-dimensional position and orientation of each image capturing apparatus can then be accurately tracked. As described above, the indicator disposition density of each of a first region corresponding to the angle of view 1010 of the image capturing apparatus 100 (first image capturing apparatus) and a second region corresponding to the shooting angle of view 1020 of the image capturing apparatus 200 (second image capturing apparatus) is determined, based on the indicator disposition density of the smallest region (herein, region of shooting angle of view 1020 as an example) out of the first region and the second region. Note that the shooting angle of view 1020 may be wider than the shooting angle of view 1010.

Herein, examples of the disposition of indicators on the display device 400 has been described using the drawings, and, as described with FIG. 6, the indicator image is displayed on the display device 400 at a different timing from the background CG 1 and the background CG 2. In this way, with respect to the update cycle of output images of two image capturing apparatuses (image capturing apparatuses 100 and 200), images are switched three times on the display device 400 within the update cycle thereof. Since the exposure times of the image capturing apparatuses 100 and 200 are not shortened, the exposure time of each image capturing apparatus can thereby be secured in in-camera VFX shooting by a plurality of image capturing apparatuses, thus enabling video having a natural image quality to be realized. Note that video having a natural image quality is video that at least realizes correct coloring for the background CG of the display device 400 and smooth movement of the object 500, but other factors for evaluating image quality may be included.

### Second Embodiment

A summary of a second embodiment will be given based on the accompanying drawings. Note that, in the second embodiment, description of portions overlapping with the first embodiment is omitted, and differences from the first embodiment will be described.

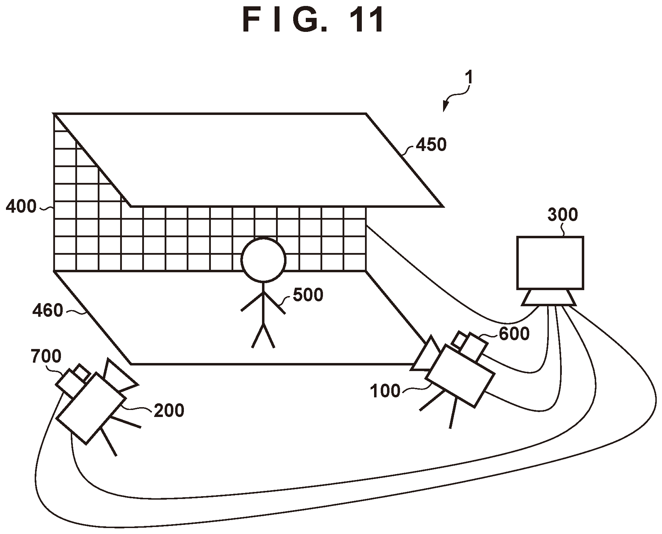

FIG. 11 is a diagram showing an example of an image capturing system 1 according to the second embodiment.

Since the roles of the image capturing apparatus 100, the image capturing apparatus 200, and the information processing apparatus 300 are similar to the first embodiment, detailed description thereof is omitted. Devices that differ from the first embodiment include a tracker 600 and a tracker 700. The tracker 600 is mounted to the image capturing apparatus 100 and the tracker 700 is mounted to the image capturing apparatus 200. The tracker 600 is a device for tracking the three-dimensional position and orientation of the image capturing apparatus 100. The tracker 700 is a device for tracking the three-dimensional position and orientation of the image capturing apparatus 200. Operations of the tracker 600 and the tracker 700 will now be described.

Specifically, the current embodiment, the tracker 600 (or tracker 700) shoots images of indicators displayed on the display device 400, analyzes the change in position of the indicators in the shot images, and precisely tracks the three-dimensional position and orientation of the image capturing apparatus 100 (or image capturing apparatus 200). The tracker 600 (or tracker 700) transmits the three-dimensional position and orientation of the image capturing apparatus 100 (or image capturing apparatus 200) to the information processing apparatus 300. Also, the region that is captured by the tracker 600 (or tracker 700) may overlap with the shooting angle of view of the image capturing apparatus 100 (or image capturing apparatus 200) or may be different therefrom. Thus, the display device 400 not only has a display region on a wall surface illustrated with a plurality of rectangular regions but also has a display region on a top surface 450. The display region on the top surface 450 can have a similar configuration to the display region on the wall surface of the display device 400. Note that the display device 400 may have a bottom surface 460 located on the opposite side to the top surface 450 as a further display region of the indicator image.

In one embodiment, the indicator image is displayed in another region (e.g., display region on top surface 450) different from the region in which the background CG 1 (hereinafter, "first background CG") and the background CG 2 (hereinafter, "second background CG") are displayed on the display device 400 (e.g., region of wall surface constituted by rectangular regions in display device 400 in FIG. 11). In another embodiment, the indicator image is displayed on the display device 400 in a direction (direction of top surface 450) different from the shooting direction (e.g., direction of wall surface of display device 400 in FIG. 11) of the image capturing apparatus 100 (first image capturing apparatus) and the shooting direction (e.g., direction of wall surface of display device 400 in FIG. 11) of the image capturing apparatus 200 (second image capturing apparatus). In yet another embodiment, the first background CG and the second background CG are displayed on the wall surface of the display device 400. Also, the indicator image is displayed on the top surface 450 of the display device 400.

As described above, by displaying the background (background CG 1, background CG 2) and the indicator image in separate regions (i.e., wall surface and top surface 450) of the display device 400, the display periods of the background CG 1 (first background CG) and the background CG 2 (second background CG) that are displayed on the display device 400 will be longer than with conventional technology, and the exposure times will be longer. Thus, the notable effect of being able to capture more natural VFX video is achieved.

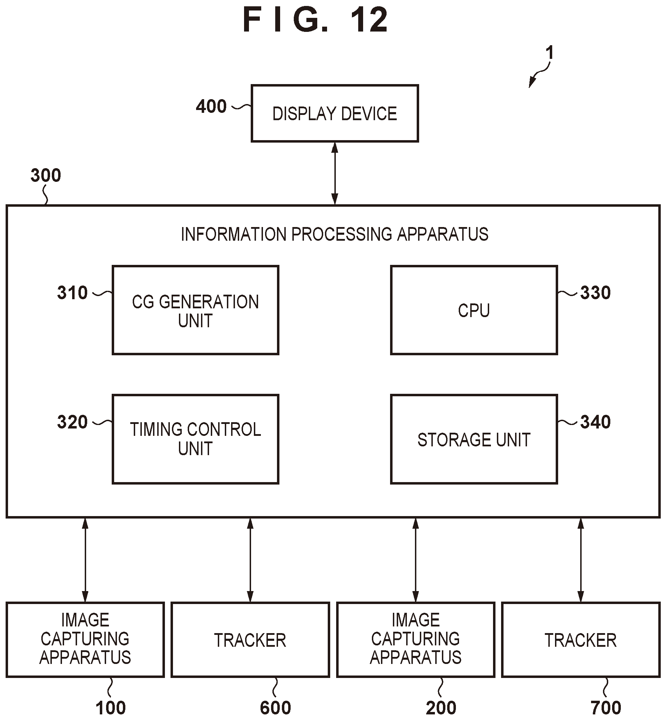

FIG. 12 is a diagram illustrating data flow between the devices in the image capturing system 1 according to the second embodiment.

The tracker 600 shoots images of the indicators displayed on the display device 400 and tracks the three-dimensional position and orientation of the image capturing apparatus 100. The tracker 700 shoots images of the indicators displayed on the display device 400 and tracks the three-dimensional position and orientation of the image capturing apparatus 200. The tracker 600 (or tracker 700) transmits the three-dimensional position and orientation of the image capturing apparatus 100 (or image capturing apparatus 200) to the information processing apparatus 300. The information processing apparatus 300 generates images of the background CG 1 and the background CG 2, according to the three-dimensional position and orientation of the image capturing apparatus 100 and the image capturing apparatus 200. The information processing apparatus 300 displays these images (background CG 1 and background CG 2) by time sharing on the display device 400 in a time-sliced manner.

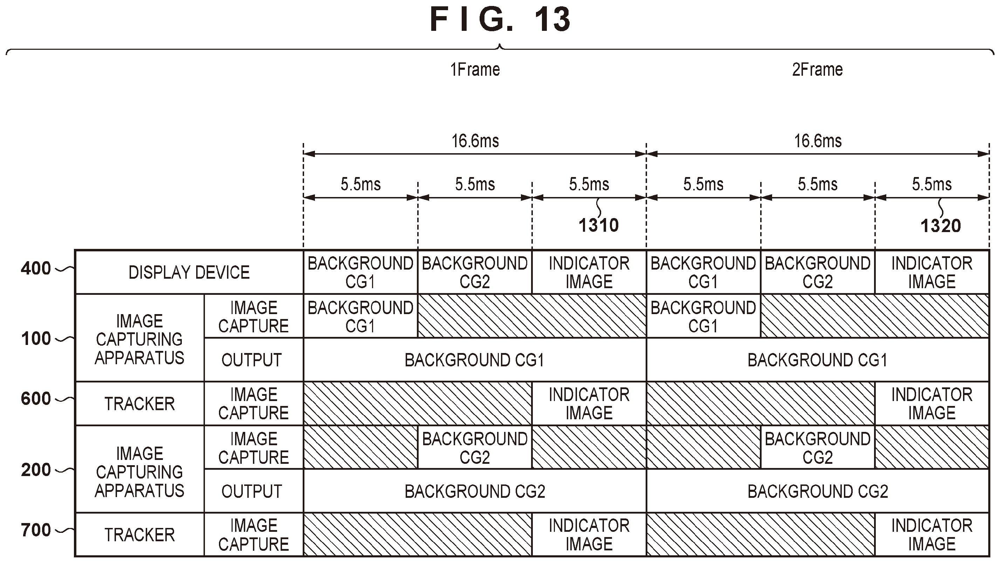

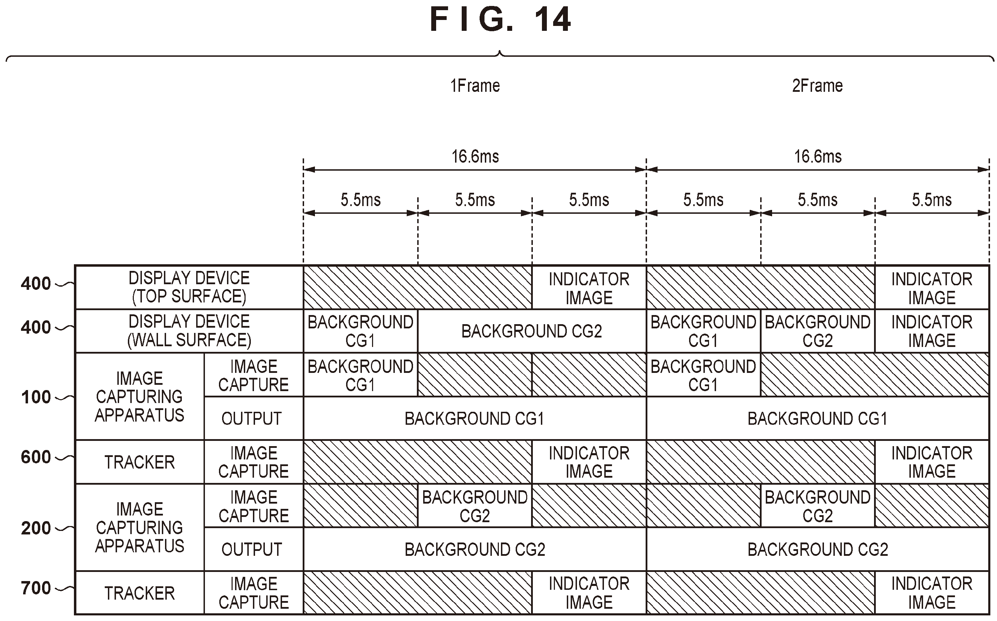

Next, the display timing of the background CG 1, the background CG 2, and the indicator image will be described using FIGS. 13 and 14.

FIG. 13 is a diagram showing an overall operation timing of the image capturing system 1 according to the second embodiment.

FIG. 13 shows the operation timing of the image capturing apparatus 100, the tracker 600, the image capturing apparatus 200, the tracker 700, and the display device 400. FIG. 13 shows a case where 60 fps VFX video is captured by the image capturing apparatus 100 and the image capturing apparatus 200. 60 fps is one example and other frame rates may be used.

The display device 400 switches between displaying the background CG 1, the background CG 2, and the indicator image in sequence during one 16.6 ms cycle of 1Frame at 60 fps. As a result, the switching time period of individual video is a period of 5.5 ms equivalent to 180 fps. Herein, 16.6 ms is divided equally to provide a display period of 5.5 ms (=16.6 ms/3) each, but the three video display periods need not be equal. For example, the display period of the background CG 1 may be set to 6.6 ms, the display period of the background CG 2 may be set to 6.6 ms, and the display period of the indicator image may be set to 3.3 ms. In this way, longer display periods may be allocated to the background CG 1 and the background CG 2. The image capturing apparatus 100 performs shooting in the display period of the background CG 1 at an angle of view that includes the background CG 1 and the object, and does not shoot images in the display period of the background CG 2 after the background CG 1. In other embodiments the time of the cycle may be set based on the fps to ensure that there is time to render a frame or image and minimize missed frames to maintain smooth motion.

As shown in FIG. 13, the tracker 600 (hereinafter, "first tracker") mounted to the image capturing apparatus 100 (first image capturing apparatus) and the tracker 700 (hereinafter, "second tracker") mounted to the image capturing apparatus 200 (second image capturing apparatus) perform image capture of the indicator image. The indicator image is displayed on the display device 400 in periods during which image capture is simultaneously performed by the first tracker and the second tracker. Periods in which image capture is simultaneously performed refer to a period 1310 indicating the last 5.5 ms of 1Frame and a period 1320 indicating the last 5.5 ms of 2Frame in FIG. 13.

On the other hand, the image capturing apparatus 200 does not perform image capture in the display period of the background CG 1 and performs image capture in the display period of the background CG 2. The tracker 600 and the tracker 700 both capture images of the indicators in the display period of the indicator image after the background CG 2. The tracker 600 and the tracker 700 analyze the change in position of the captured indicator image and accurately specify the three-dimensional position and orientation of the image capturing apparatus 100 and the image capturing apparatus 200. The tracker 600 (or tracker 700) outputs information of the three-dimensional position and orientation of the image capturing apparatus 100 (or image capturing apparatus 200) to the information processing apparatus 300.

FIG. 14 is a diagram showing another overall operation timing of the image capturing system 1 according to the second embodiment. FIG. 14 shows the operation timing of the image capturing apparatus 100, the tracker 600, the image capturing apparatus 200, the tracker 700, and the display device 400 in the case of the display device 400 being able to display video on the wall surface and the top surface.

The image capturing apparatus 100 performs image capture in the display period of the background CG 1 at an angle of view that includes the background CG 1 and the object, and does not shoot images in the display period of the background CG 2 after the background CG 1. On the other hand, the image capturing apparatus 200 does not perform image capture in the display period of the background CG 1 and performs image capture in the display period of the background CG 2. The operations up to this point are similar to the operations described with FIG. 13.

On the other hand, the indicator image is displayed on the top surface 450 of the display device 400. The tracker 600 and the tracker 700 perform image capture of the indicator image on the top surface 450 of the display device 400. Thus, the display period of the indicator image may overlap with the display period of the background CG 1 or the background CG 2. For example, in 1Frame shown in FIG. 14, the display period of the indicator image partially overlaps with the display period of the background CG 2 displayed on the wall surface of the display device 400.

Herein, an example is shown in which the display period of the background CG 2 on the wall surface of the display device 400 overlaps with the display period of the indicator image of the top surface 450, but the present embodiment is not limited thereto. For example, the display period of the background CG 1 on the wall surface of the display device 400 may overlap with the display period of the indicator image on the top surface 450.

Note that, in relation to the timing of image capture by the image capturing apparatus 100, light emitted by the indicator image on the top surface 450 is reflected on the wall surface of the display device 400 and the object 500. Thus, the image capturing apparatus 100 is not able to shoot images at a timing at which the background CG 1 is displayed at the same time as the indicator image on the top surface 450. This restriction on the shooting timing also applies to the case of performing image capture of the background CG 2 by the image capturing apparatus 200.

If the wall surface of the display device 400, the top surface 450 of the display device 400, the image capturing apparatus 100, the image capturing apparatus 200, the tracker 600, and the tracker 700 are controlled at shooting and display timings such as described above, in-camera VFX shooting by a plurality of (herein, two) image capturing apparatuses can be implemented, without overly shortening the exposure times of the image capturing apparatuses. Similarly to the first embodiment, the display device 400 switches images three times in the update cycle of output images of two image capturing apparatuses (image capturing apparatus 100 and image capturing apparatus 200). The exposure time of each image capturing apparatus can thereby be secured in in-camera VFX shooting by a plurality of image capturing apparatuses, thus enabling video having a natural image quality to be realized. Video having a natural image quality is video that at least realizes correct coloring for the background CG of the display device 400 and smooth movement of the object 500, but other factors for evaluating image quality may be included.

### Third Embodiment

Lastly, a third embodiment will be described based on the accompanying drawings. Note that, in the third embodiment, description of portions that overlap with the first embodiment and the second embodiment is omitted, and differences from the first and second embodiments will be described.

An image capturing system 1 of the third embodiment can be further provided with an image capturing apparatus 800, in addition to the image capturing apparatus 100 and the image capturing apparatus 200. Hereinafter, an example in which in-camera VFX shooting is implemented by three image capturing apparatuses will be described.

Background CG 3 that changes according to the three-dimensional position and orientation of the image capturing apparatus 800 is displayed in a time-sliced manner (time-shared manner) on the display device 400 similarly to the background CG 1 and the background CG 2. Note that since the internal configuration of the image capturing apparatus 800 is the same as the image capturing apparatus 100 and image capturing apparatus 200 shown in the first embodiment, description thereof is omitted. Also, the three image capturing apparatuses can switch the output destination every shot image. Images captured of the background CG (one of background CG 1 to background CG 3) and the object 500 are output to the output 1. Indicator images captured of the indicators and the object 500 are output to the output 2.

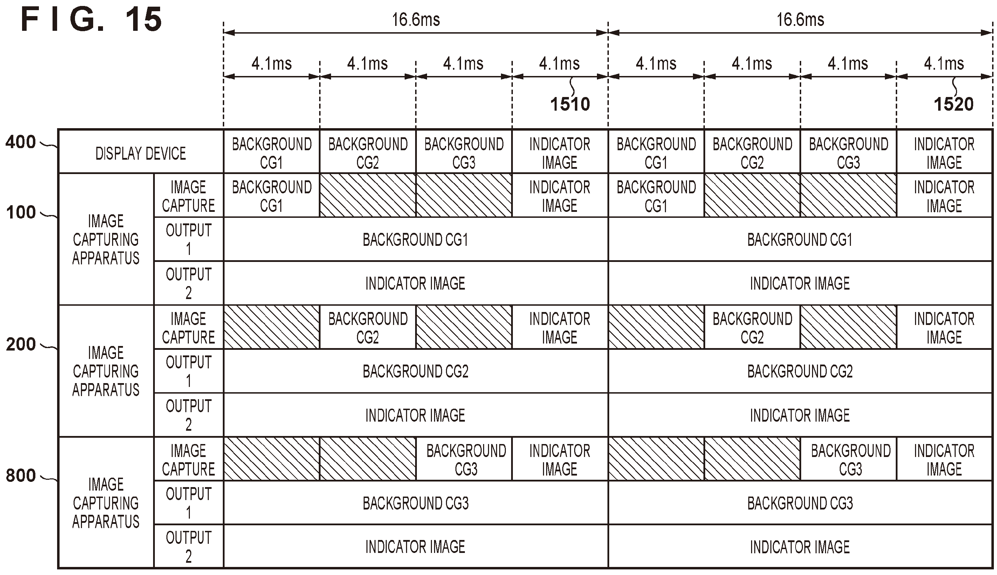

FIG. 15 is a diagram showing an overall operation timing of the image capturing system 1 according to the third embodiment. FIG. 15 shows the operation timing of the image capturing apparatus 100, the image capturing apparatus 200, the image capturing apparatus 800, and the display device 400.

FIG. 15 shows a case where 60 fps VFX video is captured by the image capturing apparatus 100, the image capturing apparatus 200, and the image capturing apparatus 800. 60 fps is one example and other frame rates may be used. The display device 400 switches between displaying the background CG 1, the background CG 2, the background CG 3, and the indicator image in sequence during one 16.6 ms cycle of 1Frame at 60 fps. As a result, the switching time period of individual video is a period of 4.1 ms equivalent to 240 fps. Herein, 16.6 ms is divided equally to provide a display period of 4.1 ms (≒ 16.6 ms/4) each, but the four video display periods need not be equal. In other embodiments the time of the cycle may be set based on the fps to ensure that there is time to render a frame or image and minimize missed frames to maintain smooth motion.

For example, the display period of the background CG 1 may be set to 4.7 ms, the display period of the background CG 2 may be set to 4.7 ms, the display period of the background CG 3 may be set to 4.7 ms, and the display period of the indicator image may be set to 2.5 ms. In this way, longer display periods may be allocated to the background CG 1, the background CG 2, and the background CG 3. The image capturing apparatus 100 performs image capture in the display period of the background CG 1 at an angle of view that includes the background CG 1 and the object, and does not shoot images in the display period of the background CG 2 after the background CG 1. Images shot by the image capturing apparatus 100 are then output to the output 1.

As described above, the timing control unit 320 (output means) of the information processing apparatus 300 outputs the background CG 1 (hereinafter, "first background CG") captured by the image capturing apparatus 100 (hereinafter, "first image capturing apparatus"), the background CG 2 (hereinafter, "second background CG") captured by the image capturing apparatus 200 (hereinafter, "second image capturing apparatus"), the background CG 3 (hereinafter, "third background CG") captured by the image capturing apparatus 800 (hereinafter, "third image capturing apparatus"), the indicator image captured by each of the first image capturing apparatus, and the second image capturing apparatus, and the third image capturing apparatus to the display device 400 in a time-sliced manner. Herein, the indicator images include indicators for specifying the three-dimensional position and direction of each of the first image capturing apparatus, the second image capturing apparatus, and the third image capturing apparatus. Also, the indicator image is displayed on the display device 400 in periods during which image capture is simultaneously performed by the first image capturing apparatus, the second image capturing apparatus, and the third image capturing apparatus. Periods in which image capture is simultaneously performed refer to a period 1510 indicating the last 4.1 ms of 1Frame and a period 1520 indicating the last 4.1 ms of 2Frame in FIG. 15.

On the other hand, the image capturing apparatus 200 does not perform image capture in the display periods of the background CG 1 and the background CG 3 and performs image capture in the display period of the background CG 2. Images shot by the image capturing apparatus 200 are then output to the output 2.

The image capturing apparatus 800 does not perform image capture in the display periods of the background CG 1 and the background CG 2 and performs image capture in the display period of the background CG 3. Images shot by the image capturing apparatus 800 are then output to the output 1.

The image capturing apparatus 100, the image capturing apparatus 200, and the image capturing apparatus 800 each shoot images in the display period of the indicator image, and the shot images are output to the output 2 of each image capturing apparatus. The images output from each output 2 are transmitted to the information processing apparatus 300. The information processing apparatus 300 analyzes the three-dimensional position and orientation of each of the image capturing apparatuses 100 to 800, and generates the background CG 1, the background CG 2, and the background CG 3 as CG respectively matching the states of the image capturing apparatuses. The display device 400 then displays the background CG 1, the background CG 2, and the background CG 3 at the timing shown in FIG. 15.

If the display device 400, the image capturing apparatus 100, the image capturing apparatus 200, the image capturing apparatus 800, and the information processing apparatus 300 are controlled at such shooting and display timings, in-camera VFX shooting can be implemented by a plurality of (herein, three) image capturing apparatuses, without overly shortening the exposure times of the image capturing apparatuses 100 to 300. With respect to the update cycle of output images of the three image capturing apparatuses (image capturing apparatus 100, image capturing apparatus 200, and image capturing apparatus 800), the display device 400 switches images four times within the update cycle period. The exposure time of each image capturing apparatus can thereby be secured in in-camera VFX shooting by a plurality of image capturing apparatuses, thus enabling video having a natural image quality to be realized. Note that video having a natural image quality is video that at least realizes correct coloring for the background CG of the display device 400 and smooth movement of the object 500, but other factors for evaluating image quality may be included.

While the present disclosure has been described in detail above based on preferred embodiments thereof, it is to be understood that the disclosure is not limited to these specific embodiments and encompasses various modes without departing from the scope of this invention as defined by the claims. Some of the above embodiments may be combined as appropriate. Put another way, some or all of the features of one embodiment may be combined with one or more other features of another embodiment.

The present disclosure also encompasses the case where software programs that realize the functions of the above-described embodiments are supplied, either directly from a recording medium or using wired/wireless communication, to a system or device having a computer capable of executing the programs, and the programs are executed.

Accordingly, in order to realize the functional processing of the present disclosure with a computer, it is to be understood that program code supplied to the computer and installed thereon also realizes the present disclosure. In other words, the present disclosure also encompasses the computer programs for realizing the functional processing of the present disclosure.

In that case, as long as the functions of a program are provided, the program can take any form, such as object code, a program executed by an interpreter, script data supplied to an OS, and the like.

Examples of recording media for supplying the programs include magnetic recording media such as hard disk and magnetic tape, optical/magneto-optical storage media, and non-volatile semiconductor memories.

Also, conceivable methods of supplying programs include storing computer programs that form the present disclosure on a server in a computer network, and downloading and executing the computer programs with a connected client computer.

While preferred embodiments of the present disclosure have been described above, the present disclosure is not limited to these embodiments and various modifications and changes falling within the spirit and scope thereof can be made. Also, the present disclosure can take the form of a system, device, method, program, or recording medium, for example.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a technique/method executed/performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

### Clauses

The following are a number of clauses which may embody one or more aspects of the present invention.
1. An information processing apparatus (300) comprising:
   means for performing output, in a time-sliced manner, of first background CG captured by a first image capturing apparatus (100), second background CG captured by a second image capturing apparatus (200), and an indicator image captured by the first image capturing apparatus (100) and the second image capturing apparatus (200) to a display device (400),
   wherein the indicator image includes an indicator for specifying a three-dimensional position and direction of each of the first image capturing apparatus (100) and the second image capturing apparatus (200), and is displayed on the display device (400) in a period during which image capture is simultaneously performed by the first image capturing apparatus (100) and the second image capturing apparatus (200).
2. The information processing apparatus (300) according to clause 1,
   wherein the indicator image includes a plurality of the indicator.
3. The information processing apparatus (300) according to clauses 1 or 2,
   wherein, in the display device (400), the indicator is disposed in a region corresponding to a shooting angle of view of the first image capturing apparatus (100) at an indicator disposition density that is based on a size of the shooting angle of view of the first image capturing apparatus (100), and the indicator is disposed in a region corresponding to a shooting angle of view of the second image capturing apparatus (200) at an indicator disposition density that is based on a size of the shooting angle of view of the second image capturing apparatus (200).
4. The information processing apparatus (300) according to any one of clauses 1 to 3,
   wherein the indicator image includes at least four of the indicator.
5. The information processing apparatus (300) according to any one of clauses 1 to 4,
   wherein an indicator disposition density of each of a first region corresponding to a shooting angle of view of the first image capturing apparatus (100) and a second region corresponding to a shooting angle of view of the second image capturing apparatus (200) is determined, based on the indicator disposition density of a smallest region out of the first region and the second region.
6. The information processing apparatus (300) according to any one of clauses 1 to 5,
   wherein output to the display device (400) is performed by outputting, in a time-sliced manner, the first background CG, the second background CG, a third background CG captured by a third image capturing apparatus, and an indicator image captured by the first image capturing apparatus (100), the second image capturing apparatus (200), and the third image capturing apparatus to the display device (400), and
   the indicator image includes an indicator for specifying a three-dimensional position and direction of each of the first image capturing apparatus (100), the second image capturing apparatus (200), and the third image capturing apparatus, and is displayed on the display device (400) in a period during which image capture is simultaneously performed by the first image capturing apparatus (100), the second image capturing apparatus (200), and the third image capturing apparatus.
7. The information processing apparatus (300) according to any one of clauses 1 to 5,
   wherein a first tracker (600) mounted to the first image capturing apparatus (100) and a second tracker (700) mounted to the second image capturing apparatus (200) capture the indicator image, and
   the indicator image is displayed on the display device (400) in a period during which image capture is simultaneously performed by the first tracker (600) and the second tracker (700).
8. The information processing apparatus (300) according to clauses 7,
   wherein the indicator image is displayed in another region different from a region in which the first background CG and the second background CG are displayed on the display device (400).
9. The information processing apparatus (300) according to clauses 7,
   wherein the indicator image is displayed on the display device (400) in a direction different from a shooting direction of the first image capturing apparatus (100) and a shooting direction of the second image capturing apparatus (200).
10. The information processing apparatus (300) according to clauses 7,
   wherein the first background CG and the second background CG are displayed on a wall surface of the display device (400), and
   the indicator image is displayed on a top surface of the display device (400).
11. The information processing apparatus (300) according to any one of clauses 1 to 5, further comprising:
   means for controlling output of the first background CG, the second background CG, and the indicator image to the display device (400) in a time-sliced manner, in an update cycle of a single image displayed on the display device (400).
12. The information processing apparatus (300) according to any one of clauses 1 to 11,
   wherein the information processing apparatus (300) is for use in in-camera VFX shooting.
13. An image capturing system (1) comprising:
   at least two image capturing apparatuses (100, 200);
   a display device (400) configured to perform display, in a time-sliced manner, of a background CG corresponding to each of the at least two image capturing apparatuses and an indicator image; and
   an information processing apparatus (300) configured to communicate with the at least two image capturing apparatuses and the display device (400), comprising:
      means for performing output, in a time-sliced manner, of first background CG captured by a first image capturing apparatus (100), second background CG captured by a second image capturing apparatus (200), and an indicator image captured by the first image capturing apparatus (100) and the second image capturing apparatus (200) to the display device (400),
      wherein the indicator image includes an indicator for specifying a three-dimensional position and direction of each of the first image capturing apparatus (100) and the second image capturing apparatus (200), and is displayed on the display device (400) in a period during which image capture is simultaneously performed by the first image capturing apparatus (100) and the second image capturing apparatus (200).
14. A method to be executed by an information processing apparatus (300), the method comprising:
   performing output, in a time-sliced manner, of first background CG captured by a first image capturing apparatus (100), second background CG captured by a second image capturing apparatus (200), and an indicator image captured by the first image capturing apparatus (100) and the second image capturing apparatus (200) to a display device (400),
   wherein the indicator image includes an indicator for specifying a three-dimensional position and direction of each of the first image capturing apparatus (100) and the second image capturing apparatus (200), and is displayed on the display device (400) in a period during which image capture is simultaneously performed by the first image capturing apparatus (100) and the second image capturing apparatus (200).
15. A computer program comprising instructions which, when executed by a computer, cause the computer to function as the information processing apparatus (300) of any one of clauses 1-12.

## Claims

1. An information processing apparatus (300) comprising:
means configured to perform output, in a time-sliced manner, of first background computer generated, CG, captured by a first image capturing apparatus (100), second background CG captured by a second image capturing apparatus (200), and an indicator image captured by the first image capturing apparatus (100) and the second image capturing apparatus (200) to a display device (400),
wherein the indicator image includes an indicator configured for specifying a three-dimensional position and direction of each of the first image capturing apparatus (100) and the second image capturing apparatus (200), and the indicator image is configured to be displayed on the display device (400) in a period during which image capture is simultaneously performed by the first image capturing apparatus (100) and the second image capturing apparatus (200).

2. The information processing apparatus (300) according to claim 1,
wherein the indicator image includes a plurality of indicators.

3. The information processing apparatus (300) according to claim 2,
wherein the indicator image includes at least four indicators.

4. The information processing apparatus (300) according to any one of claims 1 to 3,
wherein, when output to the display device (400), the indicator is disposed in a region corresponding to a shooting angle of view of the first image capturing apparatus (100), and the indicator is disposed in a region corresponding to a shooting angle of view of the second image capturing apparatus (200).

5. The information processing apparatus (300) according to claim 4, when dependent upon claim 2 or claim 3,
wherein the indicator is disposed in a region corresponding to a shooting angle of view of the first image capturing apparatus (100), at an indicator disposition density that is based on a size of the shooting angle of view of the first image capturing apparatus (100), and the indicator is disposed in a region corresponding to a shooting angle of view of the second image capturing apparatus (200) at an indicator disposition density that is based on a size of the shooting angle of view of the second image capturing apparatus (200)

6. The information processing apparatus (300) according to any one of claims 2 to 5,
wherein an indicator disposition density of each of a first region corresponding to a shooting angle of view of the first image capturing apparatus (100) and a second region corresponding to a shooting angle of view of the second image capturing apparatus (200) is determined, based on the indicator disposition density of a smallest region out of the first region and the second region.

7. The information processing apparatus (300) according to any one of claims 1 to 6,
wherein the means configured to perform output is further configured to output to the display device (400) , in a time-sliced manner, a third background CG captured by a third image capturing apparatus, and the indicator image is future configured to be captured by the third image capturing apparatus t, and
the indicator is configured for further specifying a three-dimensional position and direction of the third image capturing apparatus, and the indicator image is configured to be displayed on the display device (400) in a period during which image capture is simultaneously performed by the first image capturing apparatus (100), the second image capturing apparatus (200), and the third image capturing apparatus.

8. The information processing apparatus (300) according to any one of claims 1 to 7,
wherein a first tracker (600) mounted to the first image capturing apparatus (100) and a second tracker (700) mounted to the second image capturing apparatus (200) are configured to capture the indicator image, and
the indicator image is configured to be displayed on the display device (400) in a period during which image capture is simultaneously performed by the first tracker (600) and the second tracker (700).

9. The information processing apparatus (300) according to claim 8,
wherein the indicator image is configured to be displayed in another region different from a region in which the first background CG and the second background CG are displayed on the display device (400).

10. The information processing apparatus (300) according to claim 8,
wherein the indicator image is configured to be displayed on the display device (400) in a direction different from a shooting direction of the first image capturing apparatus (100) and a shooting direction of the second image capturing apparatus (200).

11. The information processing apparatus (300) according to claim 8,
wherein the first background CG and the second background CG are configured to be displayed on a wall surface of the display device (400), and
the indicator image is configured to be displayed on a top surface of the display device (400).

12. The information processing apparatus (300) according to any one of claims 1 to 6, further comprising:
means configured to control output of the first background CG, the second background CG, and the indicator image to the display device (400) in a time-sliced manner, in an update cycle of a single image displayed on the display device (400).

13. The information processing apparatus (300) according to any one of claims 1 to 12,
wherein the information processing apparatus (300) is configured for use in in-camera VFX shooting.

14. An image capturing system (1) comprising:
at least two image capturing apparatuses (100, 200);
a display device (400) configured to perform display, in a time-sliced manner, of a background CG corresponding to each of the at least two image capturing apparatuses and an indicator image; and
an information processing apparatus (300) configured to communicate with the at least two image capturing apparatuses and the display device (400), the information processing apparatus comprising:
means configured to perform output, in a time-sliced manner, of first background computer generated, CG, captured by a first image capturing apparatus (100), second background CG captured by a second image capturing apparatus (200), and an indicator image captured by the first image capturing apparatus (100) and the second image capturing apparatus (200) to the display device (400),
wherein the indicator image includes an indicator configured for specifying a three-dimensional position and direction of each of the first image capturing apparatus (100) and the second image capturing apparatus (200), and the indicator image is configured to be displayed on the display device (400) in a period during which image capture is simultaneously performed by the first image capturing apparatus (100) and the second image capturing apparatus (200).

15. A method to be executed by an information processing apparatus (300), the method comprising:
performing output, in a time-sliced manner, of first background CG captured by a first image capturing apparatus (100), second background CG captured by a second image capturing apparatus (200), and an indicator image captured by the first image capturing apparatus (100) and the second image capturing apparatus (200) to a display device (400),
wherein the indicator image includes an indicator for specifying a three-dimensional position and direction of each of the first image capturing apparatus (100) and the second image capturing apparatus (200), and is displayed on the display device (400) in a period during which image capture is simultaneously performed by the first image capturing apparatus (100) and the second image capturing apparatus (200).

16. A computer program comprising instructions which, when executed by a computer, cause the computer to perform the method of claim 15.
